(19) Europäisches Patentamt
European Patent Office
Office européen des brevets

(11) EP 2 131 359 A1

(12) **EUROPEAN PATENT APPLICATION**
published in accordance with Art. 153(4) EPC

(43) Date of publication:
**09.12.2009 Bulletin 2009/50**

(21) Application number: **08722705.4**

(22) Date of filing: **24.03.2008**

(51) Int Cl.:
***G11B 7/254*** (2006.01) ***C08F 220/26*** (2006.01)
***C08F 290/06*** (2006.01) ***G11B 7/24*** (2006.01)
***G11B 7/257*** (2006.01)

(86) International application number:
**PCT/JP2008/055389**

(87) International publication number:
**WO 2008/123179 (16.10.2008 Gazette 2008/42)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **26.03.2007 JP 2007078899**

(71) Applicant: **DIC Corporation**
**Tokyo 174-8520 (JP)**

(72) Inventors:
- **ITO, Daisuke**
**Kitaadachi-gun**
**Saitama 362-8577 (JP)**
- **YAMAGUCHI, Junji**
**Kitaadachi-gun**
**Saitama 362-8577 (JP)**

(74) Representative: **Albrecht, Thomas**
**Kraus & Weisert**
**Patent- und Rechtsanwälte**
**Thomas-Wimmer-Ring 15**
**80539 München (DE)**

# (54) ULTRAVIOLET-CURABLE COMPOSITION FOR OPTICAL DISK AND OPTICAL DISK

(57) ultraviolet-curable composition for an optical disk which is used in producing the optical disk which includes a substrate and, formed thereover, at least both a light reflection layer and a light transmission layer and in which data is read using a laser beam striking from the light transmission layer side. The composition is used to form the light transmission layer. The ultraviolet-curable composition for an optical disk contains an epoxy (meth) acrylate, a (metha)acrylate having two radical-polymerizable unsaturated bonds, and a free-radical photopolymerization initiator, in which the (meht)acrylate having two radiical-polymerizable unsaturated bonds contains a (meth)acrytlate of a neopentyl glycol hydroxypivalate compound, the content of the (meth)acrylate of the neopentyl glycol hydroxypivalate compound is 10 to 40% by mass, and the content of the free-radical photopolymerization initiator is 1 to 4% by mass.

FIG. 1

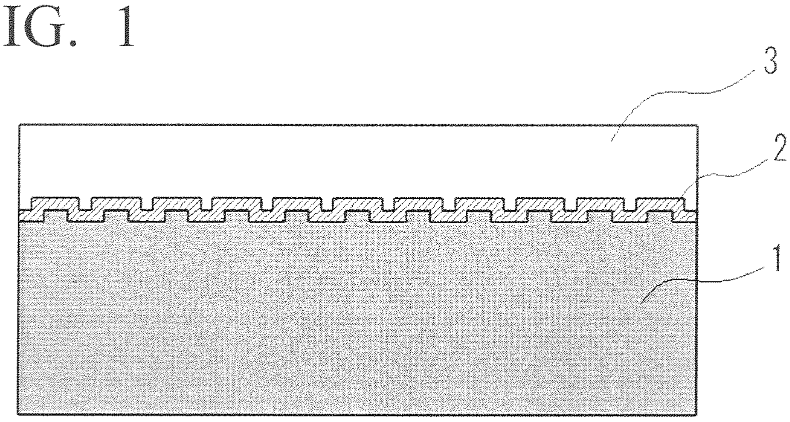


EP 2 131 359 A1

## Description

TECHNICAL FIELD

The present invention relates to an ultraviolet-curable composition useful to form a light transmission layer of an optical disk, as well as an optical disk in which at least a light reflection layer and a light transmission layer are formed, and writing or reproducing is conducted using a blue laser having an oscillatory wavelength of 370 to 430 nm through the light transmission layer.

BACKGROUND ART

In recent years, with developments in information technology and information networks, conveyance of a large volume of recorded data is frequently-performed.
Thus, a high-density and large-capacity optical disk in which a large volume of data relating to video, music, computer data, or the like, can be recorded and reproduced has been demanded. In DVDs (Digital Versatile Disks), which have been popular used as a high-density recording media, a laser beam having a shorter wavelength of 650 nm is utilized in order to achieve the densification, and optical systems have a higher numerical aperture, in comparison with CDs (Compact Disks). However, it is required that DVDs achieve still higher densification so that high-quality video or the like compatible with HDTV (High Definition Television) is recorded or replayed on DVDs. Accordingly, studies have been made on methods of high-density recording and optical disks therefore as a next generation DVD, and a high-density recording system according to a novel optical disk structure in which a blue laser beam having a wavelength shorter than that used for common DVDs is used has been proposed.
In the novel optical disk, a recording layer is formed on a transparent or opaque substrate formed of plastics such as polycarbonates, and a light transmission layer having a thickness of approximately 100 μm is laminated on the recording layer. The optical disk has a structure where recording light and/or reading light is/are injected thereinto through the light transmission layer. Studies have been focused on the use of an ultraviolet-curable composition to form such a light transmission layer of an optical disk from a productivity standpoint.
As such an optical disk in which recording or reading is conducted using a blue laser beam, an optical disk obtained by forming a data-recording layer and a light reflection layer on a disk substrate, and then laminating a light transmission layer by applying and curing the ultraviolet-curable resin thereon. In this art, a cationic polymerizable ultraviolet-curable composition is used as a material to form a light transmission layer (see Patent Document 1). However, such a cationic polymerizable ultraviolet-curable composition generates a Lewis acid, which easily corrodes the light reflection layer when an ultraviolet ray is irradiated, and therefore, there is a disadvantage in which it is difficult to retain stability of the optical disk when stored for a long time. As a material to form a light reflection layer, which is required to have a high reflectance at around 400 nm, silver or an alloy containing silver as the main component thereof is utilized. Since silver or an alloy containing silver as the main component thereof is easily subjected to chemical changes such as corrosion due to exposure to a chemical substance, it is not preferable that a cationic polymerizable ultraviolet-curable composition be used to form a light transmission layer adjacent to the light reflection layer when the light reflection layer is formed using silver or an alloy containing silver as the main component thereof.
A resin composition for an optical disk containing a radical polymerizable epoxy acrylate has been disclosed instead of the cationic polymerizable ultraviolet-curable composition (see Patent Document 2). The composition contains an epoxy acrylate, particularly, a high-density liquid oligomer such as a bisphenol A-type epoxy acrylate, as an acrylate having a low moisture-permeability, can provide a resin film that hardly causes corrosion in the metal thin film. Examples in which a bisphenol A-type epoxy acrylate is formulated with tripropylene glycol diacrylate and phenoxyethyl acrylate as monomers have been disclosed. However, the composition disclosed therein neither sufficiently suppresses corrosion of a metal reflection layer when left for a long time under high-temperature and high-humidity atmosphere, nor suppresses the decrease in the reflectance of an optical disk when exposed to light. Thus, there has been a problem in durability for practical use.
A composition containing a bisphenol-type epoxy acrylate and a caprolactone-modified neopentyl glycol hydroxy pivalate diacrylate has been disclosed as an ultraviolet-curable adhesive composition to be used to bond two optical disk substrates of a DVD or the like (see Patent Document 3). However, the disclosed composition neither has a viscosity sufficient to form a light transmission layer with a thickness of 70 to 110 μm, nor exhibit sufficient effects on suppressing the corrosion of a metal reflection layer when left for a long term in a high-temperature and high-humidity atmosphere and suppressing the decrease in the reflectance of an optical disk when exposed to light.
Patent Document 1: Japanese Unexamined Patent Application, First Publication No. H11-191240.
Patent Document 2: Japanese Unexamined Patent Application, First Publication No. H11-302309.

Patent Document 3: Japanese Laid-Open Patent Application No. 2006-104446.

DISCLOSURE OF THE INVENTION

[Problems to be Solved by the Invention]

An object to be solved by the present invention is to provide an ultraviolet-curable composition which can form a light transmission layer which exhibits excellent durability in a high-temperature and high-humidity atmosphere and excellently resists lighting such as fluorescent light, as well as an optical disk excellent in durability and light resistance.

[Means for Solving the Problems]

The inventors of the present invention have found that when a light transmission layer is formed using a coating film formed by curing a composition containing: an epoxy (meth)acrylate; a particular (meth)acrylate having two radical polymerizable unsaturated bonds; and a free-radical photopolymerization initiator, the content of the free-radical photopolymerization initiator being 1 to 4% by mass, changes in quality of a light transmission layer and a metal reflection layer in a high-temperature and high-humidity atmosphere or under photo-exposure conditions in which a fluorescent light or the like is exposed can be suppressed, and thereby an optical disk which can suppress the decrease in the reflectance or the increase in errors can be provided. Thus, the present invention has been completed.

In other words, the present invention provides an ultraviolet-curable composition for forming a light transmission layer in an optical disk in which at least both a light reflection layer and the light transmission layer are laminated on a substrate, and in which data is read using a laser beam striking from the light transmission layer side, the ultraviolet-curable composition containing: an epoxy (meth)acrylate, a (meth)acrylat having two radical polymerizable unsaturated bonds; and a free-radical photopolymerization initiator, in which

the (meth)acrylat having two radical polymerizable unsaturated bonds contains a (meth)acrylate represented by formula (1):

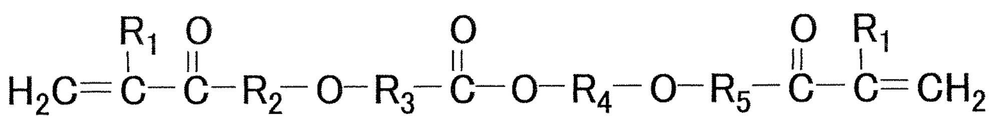

(1)

in the formula (1), $R_1$ represents a hydrogen atom or a methyl group, $R_2$ represents a single bond, an alkylene oxide group, or a group represented by formula (2):

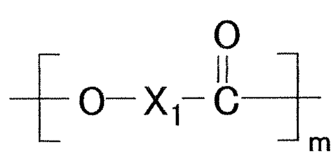

(2)

($X_1$ represents an alkylene group having 2 to 12 carbon atoms with or without a branched chain and m represents an integer of 1 to 5),

$R_3$ and $R_4$ represents an alkylene group having 2 to 12 carbon atoms with or without a branched chain, and $R_5$ represents a single bond, an alkylene oxide group, or a group represented by formula (3):

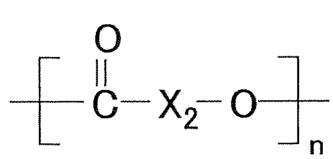

(3)

($X_2$ represents an alkylene group having 2 to 12 carbon atoms with or without a branched chain and n represents an integer of 1 to 5),
the (meth)acrylate represented by the formula (1) accounts for 10 to 40% by mass of the ultraviolet-curable compounds in the ultraviolet-curable composition, and
the free-radical photopolymerization initiator accounts for 1 to 4% by mass of the ultraviolet-curable composition.
In addition, the present invention provide an optical disk including: a substrate; a light reflection layer, and a light transmission layer composed of a cured body of an ultraviolet-curable composition, at least both the light reflection layer and the light transmission layer being laminated on the substrate, in which a data is read using a blue laser beam striking from the light transmission layer side, characterized in that the ultraviolet-curable composition is the above-mentioned ultraviolet-curable composition for an optical disk.

[Effects of the Invention]

The ultraviolet-curable composition for an optical disk according to the present invention can form a light transmission layer having an excellent durability and light resistance which results in suppression of changes in quality of the cured film or a metal reflection layer in a high-temperature and high-humidity atmosphere or under photoexposure conditions in which a fluorescent light or the like is exposed . In the optical disk having such a cured film as the light transmission layer, the decrease in the light reflection and the deterioration of signal characteristics hardly occurred even when placed in a high-temperature and high-humidity atmosphere. In addition, the decrease in light reflection and the deterioration of signal characteristics hardly occurred even when exposed to light such as fluorescent light, and thus data can be favorably recorded or read using a blue laser beam having a short wavelength.

BEST MODE FOR CARRYING OUT THE INVENTION

An ultraviolet-curable composition for an optical disk according to the present invention contains: an epoxy (meth)acrylate; a (meth)acrylate having two radical polymerizable unsaturated bonds in a molecule (hereinafter, abbreviated as bifunctional (meth)acrylate: in the same manner, one having a radical polymerizable unsaturated bond in a molecule is abbreviated as monofunctional one, and one having three radical polymerizable unsaturated bonds in a molecule is abbreviated as trifunctional one); a free-radical photopolymerization initiator. The bifunctional (meth)acrylate contains a (meth)acrylate with a particular structure. The content of the free-radical photopolymerization initiator in the ultraviolet-curable composition is 1 to 4% by mass.
In the present specification, (meth)acrylate refers to an acrylate or a methacrylate.

Epoxy (meth)acrylate

Epoxy (meth)acrylates available in the present invention are not particularly limited, provided that the epoxy (meth)acrylates are obtained by reacting a compound having at least one epoxy group in the molecule thereof with an acrylic acid. The epoxy (meth)acrylates may be modified using polyester, polyether, rubber, or the like. It is preferable that the total content of remaining chloride be 2,000 ppm or less.
In particular, epoxy (meth)acrylates having a bisphenol skeleton are preferable due to their excellent durability, and epoxy (meth)acrylates represented by formula (i), (iii), or (viii) are particularly preferable.
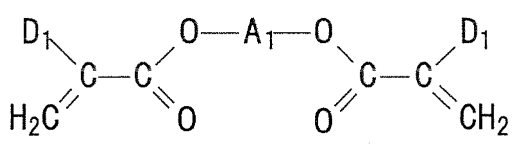

(i)

In the formula (i), $D_1$ each independently represents a hydrogen atom or a methyl group, and $A_1$ represents a group represented by formula (ii):
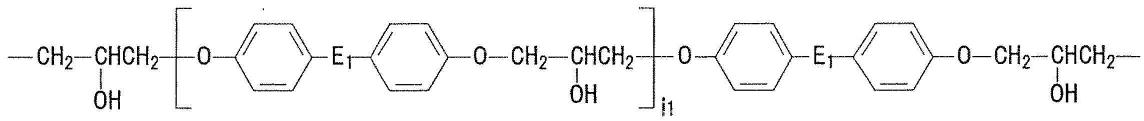 ( ii )

(in the formula (ii), $E_1$ represents $-SO_2-$, $CH_2-$, $-CH(CH_3)-$, or $-C(CH_3)_2-$, and $i_1$ represents an integer of 0 to 8). Examples of such a bisphenol-type epoxy (meth)acrylate include epoxy acrylates obtained by reacting a (meth)acrylic acid with a bisphenol A-type epoxy resin, such as EPIKOTE 802, EPIKOTE 1001, or EPIKOTE 1004, manufactured by Yuka-Shell Epoxy Co., Ltd., and a bisphenol F-type epoxy resin, such as EPIKOTE 4001P, EPIKOTE 4002P, or EPIKOTE 4003P, and specific examples thereof include UNIDIC V-5810 (manufactured by Dainippon Ink and Chemicals Inc.), and the like.

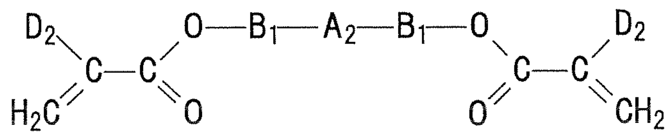 ( iii )

In the formula (iii), $D_2$ each independently represents a hydrogen atom or a methyl group; $A_2$ represents a long-chain alkyldiol group having a weight-average molecular weight of 250 to 10,000 with or without a branched chain, the long-chain alkyldiol group being unsubstituted or substituted by an ester group, an ether group, an aromatic hydrocarbon group, or an alicyclic group; and $B_1$ represents a group represented by formula (iv):

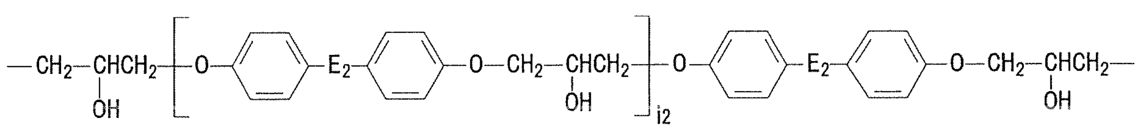 ( iv )

(in the formula (iv), $E_2$ represents $-SO_2-$, $-CH_2-$, $-CH(CH_3)-$, or $-C(CH_3)_2-$, and $i_2$ represents an integer of 0 to 8). In the formula (iii), it is preferable that $A_2$ be a group represented by any one of formulae (v) to (vii).

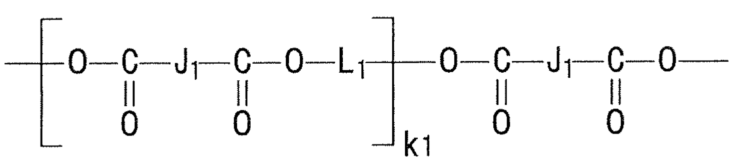 ( v )

In the formula (v), $J_1$ represents: a bivalent aromatic hydrocarbon in which a hydrogen atom may be substituted by an alkyl group having 1 to 6 carbon atoms; or a bivalent aliphatic hydrocarbon group having 2 to 10 carbon atoms which may have a branched chain, L1 represents: a bivalent aliphatic hydrocarbon group having 2 to 20 carbon atoms which may have a branched chain; or a group represented by the following formula: $-(R^2O)_p-R^2-$ ($R^2$ represents an alkylene group having 2 to 8 carbon atoms which may have a branched chain, and p represents an integer of 1 to 10), and $k_1$ represents an integer of 1 to 20.

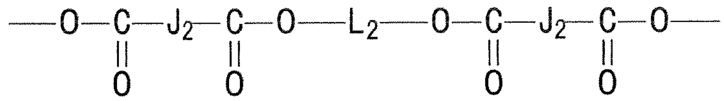
( vi )

In the formula (vi), $J_2$ represents: a bivalent aromatic hydrocarbon group in which a hydrogen atom may be substituted by an alkyl group having 1 to 6 carbon atoms; or a bivalent aliphatic hydrocarbon group having 2 to 10 carbon atoms which may have a branched chain, and $L_2$ represents: a long-chain alkyldiol residue having a number-average molecular weight of 250 to 10,000; or a polyether diol residue.

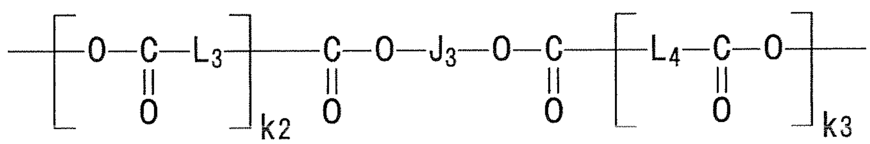
( vii )

In the formula (vii), $J_3$ represents: a bivalent aromatic hydrocarbon group in which a hydrogen atom may be substituted by an alkyl group having 1 to 6 carbon atoms; or a bivalent aliphatic hydrocarbon group having 2 to 10 carbon atoms which may have a branched chain, $L_3$ and $L_4$ each independently represent a bivalent aliphatic hydrocarbon group having 2 to 10 carbon atoms which may have a branched chain, and $k_2$ and $k_3$ each independently represents an integer of 1 to 20.

Examples of the epoxy (meth)acrylates include DICLITE UE-8080 (manufactured by Dainippon Ink and Chemicals Inc.) and the like.

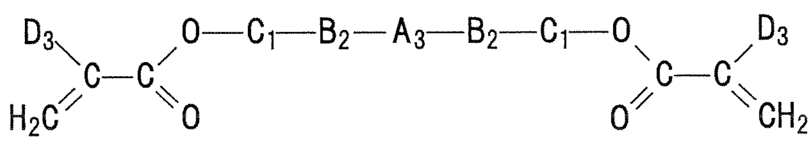
( viii )

In the formula (viii), $D_3$ each independently represents a hydrogen atom or a methyl group, and $A_3$ represents a group represented by formula (ix):

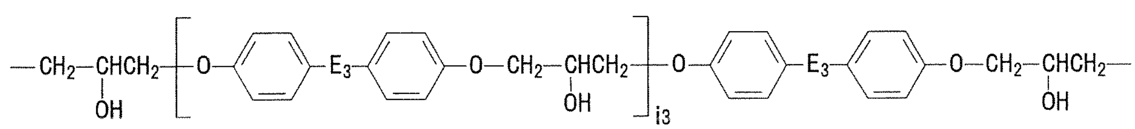
( ix )

(in the formula (ix), $E_3$ represents $-SO_2-$, $-CH_2-$, $-CH(CH_3)-$, or $-C(CH_3)_2-$, and $i_3$ represents an integer of 0 to 8), $B_2$ represents a group represented by formula (x):

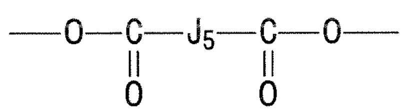
( x )

(in the formula (x), $J_5$ represents: a bivalent aromatic hydrocarbon group in which a hydrogen atom may be substituted by an alkyl group having 1 to 6 carbon atoms; or a bivalent aliphatic hydrocarbon group having 2 to 10 carbon

atoms which may have a branched chain), and $C_1$ represents: a group represented by formula (xi):

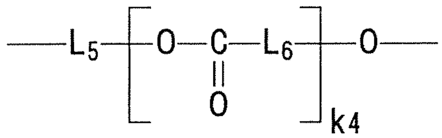

(xi)

(in which $L_5$ and $L_6$ each independently represent a bivalent aliphatic hydrocarbon group having 2 to 10 carbon atoms which may have a branched chain, and $k_4$ independently represents an integer of 1 to 20); or a group represented by formula (xii):

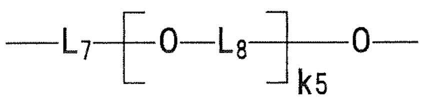

(xii)

(in which $L_7$ and $L_8$ each independently represents a bivalent aliphatic hydrocarbon group having 2 to 10 carbon atoms which may have a branched chain, and $k_5$ independently represents an integer of 1 to 20).

Examples of the epoxy (meth)acrylates include CNUVE 151 (SARTOMER), EBECRYL 3708 (DAICEL-CYTEC COMPANY LTD.), and the like.

It is preferable that the content of the epoxy (meth)acrylate in the ultraviolet-curable composition according to the present invention be 10 to 70% by mass, and more preferably 20 to 60% by mass, with respect to the content of the ultraviolet-curable compounds contained in the ultraviolet-curable composition. When the content of the epoxy (meth) acrylate is within the above-mentioned range, the durability in a high-temperature and high-humidity atmosphere is excellent, the occurrence of tilt when cured or placed in a high-temperature and high-humidity atmosphere is suppressed, and other characteristics are favorably controlled.

It is preferable that the weight-average molecular weight (Mw), measured by Gel Permeation Chromatography (GPC), of the epoxy (meth)acrylate available in the present invention be 500 to 20,000, and more preferably 800 to 15,000. When the structure and the molecular weight of the epoxy (meth)acrylate are within the above-mentioned range, the durability and the light resistance of an optical disk using the ultraviolet-curable composition according to the present invention are further improved. The weight-average molecular weight based on GPC can be determined by conducting the measurement under conditions where, for example, "HLC-8020" manufactured by Tosoh Corporation is used; "GMHxl-GMHxl-G200Hxl-G1000Hxlw" is used as the column; THF is used for the solvent; the flow rate is 1.0 ml/min; the column temperature is 40°C; the detector temperature is 30°C; and the molecular weight is based on standard polystyrene equivalent.

(Bifunctional (meth)acrylate)

The ultraviolet-curable composition according to the present invention contain a (meth)acrylate represented by the following formula (1) as a bifunctional (meth)acrylate.

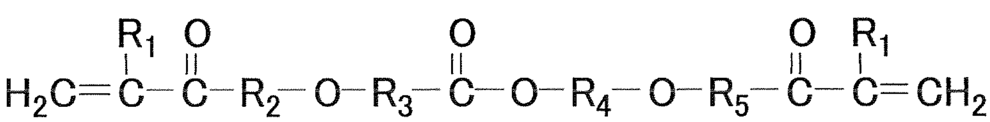

(1)

In the formula (1), $R_1$ represents a hydrogen atom or a methyl group; and $R_2$ represents a single bond, an alkylene oxide group, or a group represented by formula (2):

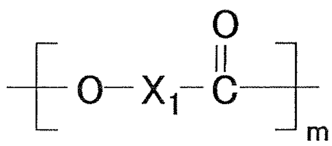
(2)

(in which $X_1$ represents an alkylene group having 2 to 12 carbon atoms which may have a branched chain, and m represents an integer of 1 to 5); $R_3$ and $R_4$ represent an alkylene group having 2 to 12 carbon atoms with or without a branched chain; and $R_5$ represents a single bond, an alkylene oxide group, or a group represented by formula (3):
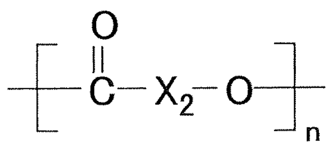
(3)

(in which $X_2$ represents an alkylene group having 2 to 12 carbon atoms which may have a branched chain, and n represents an integer of 1 to 5).
In particular, it is preferable that the bifunctional (meth)acrylate be at least one selected from the group consisting of neopentyl glycol hydroxypivalate di(meth)acrylates and caprolactone-modified neopentyl glycol hydroxypivalate di(meth)acrylates.
Commercially available examples thereof include NEW FRONTIER HPN (DAI-ICHI KOGYO SEIYAKU CO., LTD.), KAYARAD HX-220, KAYARAD HX-620 (Nippon Kayaku Co., Ltd.), and the like.
It is preferable that the content of the bifunctional (meth)acrylate be 10 to 40% by mass.

(Free-radical photopolymerization initiator)

Although any compounds which can produce radicals contributing to the initiation of polymerization of unsaturated bonds such as (meth)acrylic groups caused by being exposed to an ultraviolet ray can be used without any particular limitations as the free-radical photopolymerization initiator available in the present invention, compounds having no absorption in the oscillatory wavelength of a blue laser beam are more preferable.
Examples thereof include: molecule-cleaving-type photopolymerization initiators, such as benzoin isobutyl ether, 2,4-diethylthioxanthone, 2-isopropyl thioxanthone, benzyl, 1-hydroxycyclohexyl phenyl ketone, 1-[4-(2-hydroxyethoxy)phenyl]-2-hydroxy-2-methyl-1-propane-1-one, benzoin ethyl ether, 2,2-dimethoxy-1,2-diphenyl ethane-1-one, benzyl dimethyl ketal, 2-hydroxy-2-methyl-1-phenyl propane-1-one, 1-(4-isopropylphenyl)-2-hydroxy-2-methylpropane-1-one, and 2-methyl-1-(4-methylthiophenyl)-2-morpholino-propane-1-one, 2,4,6-trimethylbenzoyl diphenylphosphine oxide, bis(2,4,6-trimethylbenzoyl)phenylphosphine oxide, 2-hydroxy-2-methyl-[4-(1-methyl vinyl)phenylpropanone oligomer, 2-hydroxy-1-{4-[4-(2-hydroxy-2-methyl propionyl)-benzyl]-phenyl}-2-methyl propane-1-one, and the like; and hydrogen-abstraction type photopolymerization initiators, such as, benzophenone, 4-phenyl benzophenone, isophthalphenone, 4-benzoyl-4'-methyl diphenyl sulfide, and the like.
In particular, 1-hydroxy cyclohexyl phenyl ketone, 1-[4-(2-hydroxyethoxy)phenyl]-2-hydroxy-2-methyl-1-propane-1-one, 2-hydroxy-2-methyl-[4-(1-methyl vinyl)phenyl propanone oligomer, 2-hydroxy-1-{4-[4-(2-hydroxy-2-methyl propionyl)-benzyl]-phenyl}-2-methyl propane-1-one, and the like are preferable, because they do not have absorption in the oscillatory wavelength of a blue laser beam.
It is preferable that the content of the free-radical photopolymerization initiator in the ultraviolet-curable composition according to the present invention be 1 to 4% by mass. If the content is less than 1% by mass, the curability tends to become insufficient. If the content exceeds 4% by mass, the decrease in transmittance at around 400 nm may occur due to yellowing of the light transmission layer, or changes in quality of the metal reflection layer tends to occur, and thereby the deterioration of signal characteristics may occur.

(Other ultraviolet-curable compounds)

It is preferable that a (meth)acrylate having one (meth)acryloyl group in a molecule (hereinafter, abbreviated

as monofunctional (meth)acrylate) be formulated in addition to the above-mentioned epoxy (meth)acrylate and the above-mentioned bifunctional (meth)acrylate. In addition, if a (meth)acrylate having at least three (meth)acryloyl groups in a molecule (hereinafter, abbreviated as polyfunctional (meth)acrylate), and a bifunctional (meth)acrylate other than the above-mentioned bifunctional (meth)acrylate are further formulated, a composition which has a desired viscosity and which exhibits the desired elastic modulus after being cured can be obtained.

As the other ultraviolet-curable compounds, various (meth)acrylates can be used. For example, aliphatic (meth) acrylates, such as, ethyl (meth)acrylate, butyl (meth)acrylate, 2-ethylhexyl (meth)acrylate, nonyl (meth)acrylate, tridecyl (meth)acrylate, hexadecyl (meth)acrylate, octadecyl (meth)acrylate, isoamyl (meth)acrylate, isodecyl (meth)acrylate, isostearyl (meth)acrylate, ethoxyethoxyethyl (meth)acrylate, 2-hydroxyethyl (meth)acrylate, 3-chloro-2-hydroxypropyl (meth)acrylate, methoxyethyl (meth)acrylate, butoxyethyl (meth)acrylate, benzyl (meth)acrylate, or the like; aromatic (meth)acrylates, such as, nonyl phenoxy ethyl (meth)acrylate, tetrahydrofurfuryl (meth)acrylate, glycidyl (meth)acrylate, 2-hydroxy-3-phenoxy propyl (meth)acrylate, nonyl phenoxy ethyl tetrahydrofurfuryl (meth)acrylate, phenoxyethyl (meth) acrylate, or the like; alicyclic (meth)acrylates, such as, dicyclopentenyl (meth)acrylate, dicyclopentanyl (meth)acrylate, dicyclopentenyl oxyethyl (meth)acrylate, tetracyclododecanyl (meth)acrylate, cyclohexyl (meth)acrylate, or the like; caprolactone-modified tetrahydrofurfuryl (meth)acrylates, acryloylmorpholines, isobornyl (meth)acrylate, norbornyl (meth)acrylate, 2-(meth)acryloyl oxymethyl-2-methylbicycloheptane adamantyl (meth)acrylate, or the like, can be used as the monofunctional (meth)acrylate.

In particular, tetrahydrofurfuryl acrylate, phenoxyethyl acrylate, and ethoxyethoxyethyl acrylate are preferable, because changes in the film thickness or changes in disk tiltcan be suppressed.

As the bifunctional (meth)acrylate other than the above-mentioned bifunctional (meth)acrylate, 1,4-butanediol di(meth)acrylate, 3-methyl-1,5-pentanediol di(meth)acrylate, 1,6-hexanediol di(meth)acrylate, neopentyl glycol di(meth) acrylate, 2-methyl-1,8-octanediol di(meth)acrylate, 2-butyl-2-ethyl-1,3-propanediol di(meth)acrylate, ethylene glycol di (meth)acrylate, trimethylolpropane di(meth)acrylate, pentaerythritol di(meth)acrylate, polypropylene glycol di(meth)acrylate, a di(meth)acrylate of a diol obtained by adding at least 4 moles of ethylene oxide or propylene oxide to 1 mole of neopentyl glycol, an ethylene oxide-modified phosphate (meth)acrylate, an ethylene oxide-modified alkylated phosphate di(meth)acrylate, diethylene glycol di(meth)acrylate, dipropylene glycol di(meth)acrylate, tripropylene glycol di(meth) acrylate, polyether (meth)acrylate, diethylaminoethyl (meth)acrylate, a (meth)acrylate having a alicyclic structure, such as, an alicyclic bifunctional (meth)acrylate (such as norbomane dimethanol di(meth)acrylate, norbomane diethanol di (meth)acrylate, a di(meth)acrylate of a diol obtained by adding 2 moles of ethylene oxide or propylene oxide to norbomane dimethanol, tricyclodecane dimethanol di(meth)acrylate, tricyclodecane diethanol di(meth)acrylate, a di(meth)acrylate of a diol obtained by adding 2 moles of ethylene oxide or propylene oxide to tricyclodecane dimethanol, pentacyclopentadecane dimethanol di(meth)acrylate, pentacyclopentadecane diethanol di(meth)acrylate, a di(meth)acrylate of a diol obtained by adding 2 moles of ethylene oxide or propylene oxide to pentacyclopentadecane dimethanol, a di(meth) acrylate of a diol obtained by adding 2 moles of ethylene oxide or propylene oxide to pentacyclopentadecane diethanol, dimethylol dicyclopentane di(meth)acrylate, or the like, can be used, for example. In particular, tricyclodecane dimethanol di(meth)acrylate or the like is preferable.

In addition, a trifunctional or higher (meth)acrylate can be used if it is required to adjust the elastic modulus of the film after being cured to a higher level. Examples thereof include bis(2-acryloyloxyethyl)hydroxyethyl isocyanurate, bis(2-acryloyloxypropyl)hydroxypropyl isocyanurate, bis(2-acryloyloxybutyl)hydroxybutyl isocyanurate, bis(2-methacryloyloxyethyl)hydroxyethyl isocyanurate, bis(2-methacryloyloxypropyl)hydroxypropyl isocyanurate, bis(2-methacryloyloxybutyl)hydroxybutyl isocyanurate, tris(2-acryloyloxyethyl) isocyanurate, tris(2-acryloyloxypropyl) isocyanurate, tris(2-acryloyloxybutyl) isocyanurate, tris(2-methacryloyloxyethyl) isocyanurate, tris(2-methacryloyloxypropyl) isocyanurate, tris(2-methacryloyloxybutyl) isocyanurate, trimethylolpropane tri(meth)acrylate, ditrimethylolpropane tetra(meth)acrylate, pentaerythritol tri(meth)acrylate, pentaerythritol tetra(meth)acrylate, dipentaerythritol penta(meth)acrylate, dipentaerythritol hexa(meth)acrylate, di- or tri-(meth)acrylates of a triol obtained by adding at least 3 moles of ethylene oxide or propylene oxide to 1 mole of trimethylolpropane, polyfunctional (meth)acrylates such as poly(meth)acrylates of dipentaerythritol, and the like.

In addition, N-vinylpyrolidone, N-vinylcaprolactam, vinylether monomers, or other ultraviolet-curable compounds may be formulated, as needed.

It is preferable that the content of the monofunctional (meth)acrylate in the ultraviolet-curable compounds contained in the ultraviolet-curable composition according to the present invention be 3 to 40% by mass, and more preferably 5 to 30% by mass. It is preferable that the content of the trifunctional or higher (meth)acrylate be 20% by mass or less, and more preferably 10% by mass or less.

If the ultraviolet-curable composition according to the present invention is prepared to have a viscosity of 800 to 3,000 mPa • s, and more preferably 1,000 to 2,500 mPa • s, a thick light transmission layer can be favorably formed.

It is preferable that the ultraviolet-curable composition according to the present invention be prepared such that the elastic modulus of the cured film obtained after an ultraviolet ray be irradiated to the ultraviolet-curable composition is 100 to 2,000 MPa (at 30˚C). In particular, a composition that can achieve the elastic modulus of 200-1,500 MPa may

be more preferable. When the composition can achieve the elastic modulus of such a range, distortion which occurred during the curing process can be easily alleviated, whereby an optical disk which exhibits less changes in disk tilt when exposed to an environment of high temperature and humidity for a long time can be obtained. In addition, it is preferable that the ultraviolet-curable composition be prepared such that the elastic modulus of the cured film is 1,000 to 3,500 MPa (at 30°C). When the composition can achieve the elastic modulus of such a range, the error rate of recording signals is scarcely deteriorated during a process of forming an optical disk, and thus an optical disk which is excellent in reliability can be easily obtained.

(Additive agents)

The ultraviolet-curable composition may optionally contain an additive agent, such as, a surfactant, a leveling agent, a thermopolymerization inhibitor, an antioxidant such as hindered phenol or phosphite, or a light stabilizer such as hindered amine, as needed. In addition, the ultraviolet-curable composition may optionally contain a sensitizer, such as, trimethylamine, methyldimethanolamine, triethanolamine, p-dimethylaminoacetophenone, ethyl p-dimethylaminobenzoate, isoamyl p-dimethylaminobenzoate, N,N-di methylbenzylamine, or 4,4'-bis(diethylamino)benzophenone. In addition, amines that do not cause an addition reaction with the above-mentioned photopolymerizable compounds may be formulated.

(Optical disk)

The optical disk according to the present invention includes a substrate, a light reflection layer, and a light transmission layer, at least both layers being formed on the substrate. In the optical disk, recording or reading is performed using a laser beam through the light transmission layer. The light transmission layer is formed of a cured body of the above-mentioned ultraviolet-curable composition. Since the light transmission layer of the optical disk according to the present invention is formed using the above-mentioned ultraviolet-curable composition, if silver or a silver alloy is used as a reflective layer, an excellent durability can be obtained even in an environment of high-temperature and high-humidity. Therefore, data can be favorably recorded or reproduced.

It is preferable that the light transmission layer in the optical disk according to the present invention allow a blue laser beam whose oscillatory wavelength is 370 to 430 nm to be efficiently transmitted therethrough. If the thickness of the light transmission layer is 100 μm, the transmittance of a light with a wavelength of 405 nm is preferably 85% or more, and more preferably 90% or more.

It is preferable that the thickness of the light transmission layer in the optical disk according to the present invention be 70 to 110 μm. Although the thickness of the light transmission layer is generally adjusted to be approximately 100 μm, the thickness remarkably influences the light transmittance or performance of reading and writing signals, and therefore, accurate adjustment is required. The light transmission layer may be a single cured film with such a thickness, or may be formed of a plurality of laminated films.

The light reflection layer may be any one which can reflect a laser beam and which can form an optical disk capable of recording or reading the data. For example, metal, such as, gold, copper, or aluminium, alloys thereof, or inorganic compounds such as silicone can be used. In particular, silver or an alloy containing silver as the main component thereof is preferably used, since high reflectance with respect to a light at around 400 nm can be achieved. It is preferable that the thickness of the light reflection layer be approximately 10 to 60 nm.

A disk-shaped circular resin substrate can be used to form the substrate, and polycarbonates may preferably be used as such a resin. If the optical disk is a disk for read-only use, pits that enable recording of the data on the substrate are formed between the light reflection layer and the laminated layer.

On the other hand, a data-recording layer is provided between the light reflection layer and the light transmission layer in a data-writable optical disk. The data-recording layer may be any of those which enable reading or writing of the data, and may be any one selected from the group consisting of a phase-change type recording layer, an optical magnetic recording layer, and an organic coloring matter recording layer.

If the data-recording layer is a phase-change type recording layer, the data-recording layer is generally configured to a dielectric layer and a phase-change film. Therefore, it is required that the dielectric layer have a function that buffers heat generated in the phase-change layer and that adjusts the reflectance of the disk, and a mixed composition containing ZnS and $SiO_2$ is used. The phase-change film generates a difference in reflectance between an amorphous state and a crystal state due to the phase change of the film, and a Ge-Sb-Te-based, Sb-Te-based, or Ag-In-Sb-Te-based alloy can be used.

Two or more data-recording area may be formed in the optical disk according to the present invention. For example, in the case of an optical disk for read-only use, a first light reflection layer and a first light transmission layer may be laminated on a substrate having pits, and a second light reflection layer and a second light transmission layer may be provided on the first light transmission layer or on other layers formed on the first light transmission layer. In this

case, pits are formed on the first light transmission layer or on the other layers formed thereon. On the other hand, in the case of a readable and writable optical disk, a data-recording layer, a light reflection layer, and a light transmission layer are laminated on a substrate. A second light reflection layer, a second data-recording layer, and a second light transmission layer may be further provided on the light transmission layer to provide two data-recording layers, or three or more data-recording layers may be provided by repeatedly laminating the above layers. When a plurality of layers is laminated, the thickness of each layer may be suitably adjusted such that the sum of the thickness of each layers is within the above-mentioned range.

Although the top layer may be a light transmission layer in the optical disk according to the present invention, a surface-coat layer may be further provided on the light transmission layer.

The optical disk according to the present invention is a read-only use disk or a readable and writable disk. The read-only use disk can be obtained by: providing pits that serve as a data-recording layer while forming one piece of disk resin substrate by conducting injection molding; forming a light reflection layer on the data-recording layer; applying the ultraviolet-curable composition on the light reflection layer by conducting spin coating or the like; and then curing the ultraviolet-curable composition by performing UV irradiation to form a light transmission layer. The readable and writable disk can be obtained by: forming a light reflection layer on one piece of a disk resin substrate; providing thereon a data-recording layer such as a phase-change film or an optical magnetic recording film; applying the ultraviolet-curable composition on the light reflection layer by conducting spin coating or the like; and then curing the ultraviolet-curable composition by performing UV irradiation to form a light transmission layer.

When the ultraviolet-curable composition applied on the light reflection layer is cured by performing UV irradiation, for example, a continuous light irradiation system using a metal halide lamp, a high-pressure mercury vapor lamp, or the like, or a flashing discharge system as described in United States Patent 5904795 may be adopted. The flashing discharge system is preferably used since such a system can efficiently cure the composition.

It is preferable that the UV irradiation be controlled such that the accumulated light amount is 0.05 to 1 $J/cm^2$. The accumulated light amount is more preferably 0.05 to 0.8 $J/cm^2$, and even more preferably 0.05 to 0.6 $J/cm^2$. The ultraviolet-curable composition used to form the optical disk according to the present invention can be sufficiently cured even if the accumulated light amount is small. Accordingly, tackiness is not generated on the edge or the surface of the optical disk, and neither tilt nor distortion occurs on the optical disk.

It is preferable that changes in regular reflectance of light at around 405 nm (measured from the light transmission layer side before and after the optical disk according to the present invention is exposed for 240 hours to an environment in which the temperature is maintained at 80°C and the humidity is maintained at 85%) be as small as possible, and more preferable that they be 1% or less. In addition, with respect to SER which is the signal error rate, it is preferable that the SER after being exposed be smaller than that before being exposed. If the change in regular reflectance between the beginning and end of the exposure is within the above-mentioned range, and the SER approaches 1, writing and reading is favorably conducted in the optical disk even when exposed for a long time to an environment of high-temperature and high-humidity.

(Embodiment)

Hereinafter, with regard to embodiments of the optical disk according to the present invention, a monolayer-type optical disk and a dual-type optical disk will be shown as examples of specific configuration.

As a preferable embodiment of the monolayer-type optical disk according to the present invention, for example, a configuration in which a light reflection layer 2 and a light transmission layer 3 are laminated on a substrate 1 as shown in FIG. 1 where data-recording or -reading is performed by irradiating a blue laser beam to the side of the light transmission layer can be mentioned. The projected or recessed parts shown in the figure illustrate recording tracks (e.g. grooves). The light transmission layer 3 is formed of the cured body of the ultraviolet-curable composition of the present invention. The thickness of the light transmission layer 3 may be within a range of $100\pm10$ μm. The thickness of a substrate 1 may be about 1.1 mm, and the light reflection layer may be a thin film of silver or the like.

FIG. 2 shows a configuration in which a hard coat layer 4 is provided as a top layer in the structure shown in FIG. 1. It is preferable that the hard coat layer have a higher hardness to achieve excellent abrasion resistance. The thickness of the hard coat layer may preferably be 1 to 10 μm, and may more preferably be 3 to 5 μm.

With regard to a preferable embodiment of a multi-layer-type optical disk, for example, as shown in FIG. 3, a configuration of a dual-type optical disk in which a light reflection layer 5 and a light transmission layer 6 are laminated on a substrate 1, and a light reflection layer 2 and a light transmission layer 3 are further laminated thereon where data-recording or -reading is performed by irradiating a blue laser beam to the side of the light transmission layer 3 can be mentioned. The light transmission layer 3 and the light transmission layer 6 are formed of cured bodies of ultraviolet-curable compositions, and at least one of the light transmission layers 3 and 6 may be formed of the cured body of the ultraviolet-curable composition according to the present invention. With regard to the thickness thereof, the total thickness of the light transmission layers 3 and 6 may be within a range of $100\pm10$ μm. The thickness of the substrate 1 may be

about 1.1 mm. The light reflection layer may be a thin film of silver or the like.

In the configuration of the dual-type optical disk, recording tracks (grooves) are also formed on the surface of the light transmission layer 6. Accordingly, the light transmission layer 6 may be configured of a plurality of layers formed by laminating, on a layer formed of a cured film of an ultraviolet-curable composition having excellent adhesion properties, layers formed of a cured film of an ultraviolet-curable composition that can sufficiently form recording tracks. Additionally, a hard coat layer may also be provided as a top layer in this configuration.

Hereinafter, a method for producing the optical disk shown in FIG. 1 will be explained.

At first, the substrate 1 having guide grooves, which are so-called "recording tracks (grooves)" for tracking a laser beam, is provided by performing injection-molding of a polycarbonate resin. Then, the light reflection layer 2 is formed by sputtering or evaporating a silver alloy or the like on the surface of the substrate 1 where the recording tracks are provided. The ultraviolet-curable composition according to the present invention is applied thereon, and an ultraviolet ray is irradiated to one side or both sides of the disk to cure the ultraviolet-curable composition, thereby forming the light transmission layer 3. In this manner, the optical disk shown in FIG. 1 is produced. To produce the optical disk shown in FIG. 2, the hard coat layer 4 is further formed on the disk of FIG. 1 by performing spin coating or the like.

Hereinafter, a method for producing the optical disk shown in FIG. 3 will be explained.

At first, the substrate 1 having guide grooves, which are so-called "recording tracks (grooves)" for tracking a laser beam, is provided by performing injection-molding of a polycarbonate resin. Then, the light reflection layer 6 is formed by sputtering or evaporating a silver alloy or the like on the surface of the substrate 1 where recording tracks are provided.

The light transmission layer 5 is formed on the light reflection layer 6 using the ultraviolet-curable composition according to the present invention or an arbitrary ultraviolet-curable composition. At this time, recording tracks (grooves) are formed thereon using a mold. The step of forming the recording tracks (grooves) may be conducted in the following manner. The ultraviolet-curable composition is coated onto the light reflection layer 6 formed on the substrate 1, and the mold that can form recording tracks (grooves) is applied to the coated ultraviolet-curable composition.

Then, an ultraviolet ray is irradiated to cure the ultraviolet-curable composition to one side or both sides of the disk where the mold is fixed. Subsequently, the mold is removed, a silver alloy or the like is sputtered or evaporated on the surface of the light transmission layer 5 where recording tracks (grooves) are present to form the light reflection layer 2. The ultraviolet curable composition is further coated thereon, and then, is cured by performing UV irradiation to form the light transmission layer 3. In this manner, the optical disk shown in FIG. 3 is produced. Additionally, if a phase-change-type recording layer is used as the light reflection layer, the optical disk can be produced in the same manner as described above.

## EXAMPLES

Hereinafter, the present invention will be explained in detail with reference to Synthesis Examples and Examples. However, the present invention is not limited to the Examples. Additionally, the term "part" refers to "part by mass" in the Examples.

In Examples 1 to 9 and Comparative Examples 1 to 4, each ultraviolet-curable compositions were prepared by heating and dissolving at 60˚C for 3 hours each composition consisting of components shown in the following Tables 1 and 2 (in which each values of the components mean "part by masts"). The obtained compositions were evaluated as described below, and the obtained results are shown in Tables 1 and 2.

<Method for measuring viscosity>

The viscosity of the ultraviolet-curable composition was measured at 25˚C using a B-type viscometer ("Type-BM" manufactured by TOKYO KEIKI INC.).

<Method for measuring elasticity modulus>

The ultraviolet-curable composition was coated onto a glass plate such that the thickness of the cured film was 100±10 μm. Then, the coated ultraviolet-curable composition was cured in the atmosphere of nitrogen at 500 mJ/cm$^2$ using a metal halide lamp (equipped with a cold mirror and whose lamp output was 120 W/cm). The elastic modulus of the cured film was measured using an auto dynamic viscous elasticity analyzer produced by TA Instruments, and the measured dynamic elastic modulus E' at 30˚C was used as an elastic modulus for evaluation.

<Durability test of optical disk>

An optical disk substrate 120 mm in diameter and 1.2 mm thick was prepared. An alloy composed of silver (the main component thereof) and bismuth was sputtered to form a layer 20 to 40 nm thick thereon, and then, each ultraviolet-curable composition shown in Table 1 or 2 was coated onto the metal reflection layer with a spin coater, such that the thickness of the cured film was 100±10 μm. The coated ultraviolet-curable composition was cured by irradiating twice ultraviolet ray of 500 mJ/cm$^2$ (the amount of irradiation measured with an actinometer UVPF-36 produced by EYE GRAPHICS CO., LTD.) thereto with a metal halide lamp (120 W/cm) equipped with a cold mirror to produce a sample disk for the evaluation. The obtained sample disk was exposed to an environment of high temperature and high humidity (80°C and relative humidity of 85%) for 240 hours with an environment tester "PR-2PK" (produced by ESPEC Corp.) (i.e. durability test). A regular reflectance was measured at 405 nm with a spectrophotometer "UV-3100" (produced by Shimadzu Corporation) with respect to the side of the sample disk adjacent to the light transmission layer before and after the exposure to the environment of high temperature and high humidity, and evaluated in accordance with the following criteria.

○: Changes in the reflectance before and after the exposure were 1.0% or less.
×: Changes in the reflectance before and after the exposure exceeded 1.0%.

<Evaluation of light resistance (exposure test under fluorescent lamp) and reflectance of optical disk, and evaluation of color difference of light transmission layer >

Each optical disk samples obtained in the same way as described above were subjected to an exposure test under a fluorescent lamp. Two 20W fluorescent lamps (NEOLUMISUPER FL20SSW/18 (18 watt) manufactured by Mitsubishi Electric Corporation) were arranged in parallel on the same plane while adjusting the center-distance of the fluorescent lames to 8 cm, and then each optical disk sample was disposed at the position, which is 20 cm away from the center of the fluorescent lamps, such that the light transmission layer of the optical disk sample and the fluorescent lamp faced each other, and then an exposure test under a fluorescent lamp was conducted.

Exposure was conducted for 240 hours. The reflectance of each sample was measured using a spectral photometer with respect to the side of the sample adjacent to the light transmission layer before and after the exposure. In addition, the color difference of each sample was measured using a spectro-colorimeter (CM-2600d manufactured by Konica Minolta Holdings, Inc.) with respect to the side of the sample adjacent to the light transmission layer before and after the exposure, and evaluated in the following criteria. The color difference ΔE*ab was calculated in accordance with the following formula:

$$\Delta E^*ab=\{(\Delta L^*)^2+(\Delta a^*)^2+(\Delta b^*)^2\}^{1/2}$$

in which ΔL*, Δa*, and Δb* represent the difference of color coordinates L*, a*, b*, as expressed in an L*a*b* color coordinate system of C light source and 2° visual field with respect to the side of the optical disk adjacent to the light transmission layer (silver alloy translucent reflective layer), between the beginning and end of the exposure. If a value of ΔE*ab is small, the discoloration of the disk is suppressed and the disk exhibits an excellent resistance to discoloration.

(Reflectance)

○: changes in the reflectance before and after the exposure were 1.0% or less.
×: Changes in the reflectance before and after the exposure exceeded 1.0%.

(Color difference)

○: Changes in the color difference were 2.0% or less.
×: Changes in the color difference exceeded 2.0%.

<Durability test of optical disk: measurement of BD signal>

A blu-ray disk substrate 120 mm in diameter and 1.1 mm thick was prepared. An alloy composed of silver (the main component thereof) and bismuth was sputtered to form a layer 20 to 40 nm thick thereon, and then, each ultraviolet-curable composition shown in Table 1 or 2 was coated onto the metal reflection layer with a spin coater, such that the thickness of the cured film was 100±10 μm. The coated ultraviolet-curable composition was cured by irradiating 12 shots of an ultraviolet ray thereto with a flash lamp. A hard coat DAICURE CLEAR HC-1 (manufactured by Dainippon Ink and Chemicals Inc.) was coated onto the formed light transmission layer such that the thickness thereof was 3 to 5 μm. The coated hard coat was cured at 500 $mJ/cm^2$ (the amount of irradiation) using a metal halide lamp (120 W/cm) equipped with a cold mirror to produce a sample disk for the evaluation. The obtained sample disk was exposed to an environment of high temperature and high humidity (80°C and relative humidity of 85%) for 240 hours with an environment tester "PR-2PK" (produced by ESPEC Corp.) (i.e. durability test). With respect to each sample disks before and after the exposure, R-SER (1000 LDC blocks), reflectivity R8H, and jitter (Trailing Jitter) were measured from 25-30 mm, 35-40 mm, and 50-55 mm, from the center of the sample disks, respectively, and then averaged to evaluate the sample disks in accordance with the following criteria.

(R-SER)

○: R-SER after the exposure was $2\times10^{-4}$ or less.
×: R-SER after the exposure exceeded $2\times10^{-4}$.

(Reflectance R8H)

○: Changes in R8H before and after the exposure was 5.0% or less.
×: Changes in R8H before and after the exposure exceeded 5.0%.

(Trailing Jitter)

○: Changes in Jitter before and after the exposure was 2 or less.
×: Changes in Jitter before and after the exposure exceeded 2.

<Evaluation of light resistance of optical disk (exposure test under fluorescent lamp): measurement of BD signal>

Each optical disk samples obtained in the same way as described above were subjected to an exposure test under a fluorescent lamp. Two 20W fluorescent lamps (NEOLUMISUPER FL20SSW/18 (18 watt) manufactured by Mitsubishi Electric Corporation) were arranged in parallel on the same plane while adjusting the center-distance of the fluorescent lames to 8 cm, and then each optical disk sample was disposed at the position, which is 20 cm away from the center of the fluorescent lamps, such that the light transmission layer of the optical disk sample and the fluorescent lamp face each other, and then an exposure test under a fluorescent lamp was conducted.

(R-SER)

○: R-SER after the exposure was $2\times10^{-4}$ or less.
×: R-SER after the exposure exceeded $2\times10^{-4}$.

(reflectance R8H)

○: Changes in R8H before and after the exposure was 5.0% or less,
×: Changes in R8H before and after the exposure exceeded 5.0%.

(Trailing Jitter)

○: Changes in Jitter before and after the exposure was 2 or less.
×: Changes in Jitter before and after the exposure exceeded 2.

Table 1

| | | | EXAMPLE | | | | | | | | |
|---|---|---|---|---|---|---|---|---|---|---|---|
| | | | 1 | 2 | 3 | 4 | 5 | 6 | 7 | 8 | 9 |
| Epoxy acrylate | | EA1 | 57 | | | | | | 47 | 37 | 32 |
| | | EA2 | | 45 | 44 | 43 | 45 | 44 | | | |
| | | EA3 | | | | | | | 10 | 20 | 20 |
| Bifunctional acrylate | | HPNDA | 16 | 21 | 30 | 37 | | | 16 | 16 | 31 |
| | | HPNDA-CL | | | | | 21 | 30 | | | |
| | | TPGDA | | | | | | | | | |
| | | DPGDA | | | | | | | | | |
| Monofunctional acrylate | | PEA | 25 | 32 | 24 | 18 | 32 | 24 | 25 | 25 | 15 |
| Photopolymerization initiator | | Irg. 184 | 2 | 2 | 2 | 2 | 2 | 2 | 2 | 2 | 2 |
| Other components | | PM-2 | 0.01 | 0.01 | 0.01 | 0.01 | 0.01 | 0.01 | 0.01 | 0.01 | 0.01 |
| | | GA | 0.05 | 0.05 | 0.05 | 0.05 | 0.05 | 0.05 | 0.05 | 0.05 | 0.05 |
| Total | | | 100.06 | 100,06 | 100.06 | 100.06 | 100.06 | 100.06 | 100.06 | 100.06 | 100.06 |
| Viscosity (mPa·s/25˚C) | | | 2010 | 1930 | 2070 | 2180 | 2100 | 2470 | 1990 | 1860 | 1480 |
| Elasticity modulus (30˚C)/ MPa | | | 1000 | 330 | 820 | 1190 | 17 | 25 | 1860 | 2600 | 3030 |
| Reflectance | Durability test | Change rate | -0.60 | -0.39 | -0.20 | 0.08 | -0.25 | -0.47 | -0.62 | -0.66 | -0.55 |
| | | Evaluation | ○ | ○ | ○ | ○ | ○ | ○ | ○ | ○ | ○ |
| | Fluorescent light exposure test | Change rate | -0.67 | -0.76 | -0.60 | -0.32 | 0.18 | -0.23 | -0.62 | -0.54 | -0.30 |
| | | Evaluation | ○ | ○ | ○ | ○ | ○ | ○ | ○ | ○ | ○ |
| Color difference (ΔE) | Fluorescent light exposure test | | 1.09 | 1.34 | 1.17 | 1.60 | 1.23 | 1.13 | 1.11 | 1.02 | 1.00 |
| | Evaluation | | ○ | ○ | ○ | ○ | ○ | ○ | ○ | ○ | ○ |

(continued)

| | | | EXAMPLE | | | | | | | | |
|---|---|---|---|---|---|---|---|---|---|---|---|
| | | | 1 | 2 | 3 | 4 | 5 | 6 | 7 | 8 | 9 |
| Durability test | R-SER (1k) $\times 10^{-4}$ | Before test | 0.64 | 0.53 | 0.83 | 0.06 | 0.13 | 0.13 | 0.30 | 0.23 | 0.24 |
| | | After test | 0.75 | 0.88 | 1.14 | 0.12 | 0.85 | 1.22 | 0.68 | 0.67 | 0.60 |
| | | Change rate | 1.17 | 1.66 | 1.37 | 2.00 | 6.54 | 9.38 | 2.27 | 2.91 | 2.50 |
| | | Evaluation | ○ | ○ | ○ | ○ | ○ | ○ | ○ | ○ | ○ |
| | R8H | Before test | 42.6 | 45.0 | 45.9 | 45.2 | 43.6 | 43.5 | 41.7 | 41.2 | 41.0 |
| | | After test | 37.9 | 42.8 | 45.5 | 45.2 | 39.2 | 39.0 | 38.1 | 38.2 | 38.3 |
| | | Change rate | -4.7 | -2.2 | -0.4 | 0.0 | -4.4 | -4.5 | -3.6 | -3.0 | -2.7 |
| | | Evaluation | ○ | ○ | ○ | ○ | ○ | ○ | ○ | ○ | ○ |
| | Trailing Jitter | Before test | 4.2 | 4.3 | 4.3 | 4.3 | 4.5 | 4.6 | 5.4 | 5.2 | 5.3 |
| | | After test | 4.2 | 4.4 | 4.6 | 4.4 | 4.9 | 5.3 | 5.9 | 5.8 | 6.0 |
| | | Change rate | 0.0 | 0.1 | 0.3 | 0.1 | 0.4 | 0.7 | 0.5 | 0.6 | 0.7 |
| | | Evaluation | ○ | ○ | ○ | ○ | ○ | ○ | ○ | ○ | ○ |
| Fluorescent light test | R-SER (1k) $\times 10^{-4}$ | Before test | 1.09 | 0.56 | 0.74 | 0.06 | 0.11 | 0.12 | 0.39 | 0.20 | 0.16 |
| | | After test | 1.80 | 0.62 | 0.71 | 0.08 | 0.12 | 0.13 | 0.43 | 0.30 | 0.21 |
| | | Change rate | 1.7 | 1.1 | 1.0 | 1.3 | 1.1 | 1.1 | 1.1 | 1.5 | 1.3 |
| | | Evaluation | ○ | ○ | ○ | ○ | ○ | ○ | ○ | ○ | ○ |
| | R8H | Before test | 42.7 | 45.2 | 45.9 | 45.1 | 43.5 | 43.3 | 41.1 | 41.0 | 40.8 |
| | | After test | 37.9 | 41.1 | 43.6 | 44.1 | 40.5 | 39.2 | 36.7 | 36.9 | 37.1 |
| | | Change rate | -4.8 | -4.1 | -2.3 | -1.0 | -3.0 | -4.1 | -4.4 | -4.1 | -3.7 |
| | | Evaluation | ○ | ○ | ○ | ○ | ○ | ○ | ○ | ○ | ○ |
| | Trailing Jitter | Before test | 4.2 | 4.3 | 4.3 | 4.2 | 4.4 | 4.4 | 5.3 | 5.3 | 5.2 |
| | | After test | 4.2 | 4.3 | 4.3 | 4.2 | 4.4 | 4.5 | 5.3 | 5.3 | 5.3 |
| | | Change rate | 0.0 | 0.0 | 0.0 | 0.0 | 0.0 | 0.1 | 0.0 | 0.0 | 0.1 |
| | | Evaluation | ○ | ○ | ○ | ○ | ○ | ○ | ○ | ○ | ○ |

Table 2

| | | | COMPARATIVE EXAMPLE 1 | COMPARATIVE EXAMPLE 2 | COMPARATIVE EXAMPLE 3 | COMPARATIVE EXAMPLE 4 |
|---|---|---|---|---|---|---|
| Epoxy acrylate | | EA1 | 58.5 | | 60 | |
| | | EA2 | | 47 | | |
| | | EA3 | | | | 25 |
| Bifunctional acrylate | | HPNDA | | | | |
| | | HPNDA-CL | | | | 75 |
| | | TPGDA | 18 | 21 | | |
| | | DPGDA | | | 10 | |
| Monofunctional acrylate | | PEA | 21.5 | 30 | 28 | |
| Photopolymerization initiator | | Irg. 184 | 2 | 2 | 2 | 6 |
| Other components | | PM-2 | 0.01 | 0.01 | 0.01 | 0.1 |
| | | GA | 0.05 | 0.05 | 0.05 | |
| Total | | | 100.06 | 100.06 | 100.06 | 106.1 |
| Viscosity (mPa • s/ 25˚C) | | | 2010 | 1980 | 2080 | 488 |
| Elasticity modulus (30˚C)/ MPa | | | 840 | 150 | 800 | 310 |
| Reflectance | Durability test | Change rate | -0.64 | -1.01 | -1.29 | Corrosion |
| | | Evaluation | ○ | × | × | × |
| | Fluorescent light exposure test | Change rate | -1.26 | -2.84 | -1.17 | -9.03 |
| | | Evaluation | × | × | × | × |
| Color difference (ΔE) | Fluorescent light exposure test | | 2.13 | 3.54 | 2.09 | 4.62 |
| | Evaluation | | × | × | × | × |
| Durability test | R-SER (1k) $\times 10^{-4}$ | Before test | 1.24 | 0.88 | 0.68 | 1.11 |
| | | After test | 1.32 | 1.23 | 0.87 | Unmeasurable |
| | | Change rate | 1.06 | 1.40 | 1.28 | - |
| | | Evaluation | ○ | ○ | ○ | × |
| | R8H | Before test | 43.8 | 45.2 | 45.5 | 43.9 |
| | | After test | 39.0 | 39.6 | 39.7 | Unmeasurable |
| | | Change rate | -4.8 | -5.6 | -5.8 | - |
| | | Evaluation | ○ | × | × | × |
| | Trailing Jitter | Before test | 4.2 | 4.3 | 4.5 | 4.6 |
| | | After test | 4.2 | 4.5 | 4.6 | Unmeasurable |
| | | Change rate | 0.0 | 0.2 | 0.1 | - |
| | | Evaluation | ○ | ○ | ○ | × |

(continued)

| | | | COMPARATIVE EXAMPLE | | | |
|---|---|---|---|---|---|---|
| | | | 1 | 2 | 3 | 4 |
| Fluorescent light test | R-SER (1k) $\times 10^{-4}$ | Before test | 1.02 | 0.86 | 0.66 | 1.13 |
| | | After test | 1.70 | 0.88 | 0.70 | 1.15 |
| | | Change rate | 1.7 | 1.0 | 1.1 | 1.0 |
| | | Evaluation | ○ | ○ | ○ | × |
| | R8H | Before test | 43.7 | 45.3 | 45.4 | 44.0 |
| | | After test | 36.1 | 37.1 | 39.4 | 35.1 |
| | | Change rate | -7.6 | -8.2 | -6.0 | -8.9 |
| | | Evaluation | × | × | × | × |
| | Trailing Jitter | Before test | 4.2 | 4.3 | 4.5 | 4.5 |
| | | After test | 4.2 | 4.3 | 4.5 | 4.6 |
| | | Change rate | 0.0 | 0.0 | 0.0 | 0.1 |
| | | Evaluation | ○ | ○ | ○ | × |

EA1: Epoxy acrylate "CNUVE 151" (manufactured by SARTOMER)
EA2: Epoxy acrylate "R26-269" (manufactured by Dainippon Ink and Chemicals Inc.)
EA3: Bisphenol A diglycidyl ether diacrylate
HPNDA: Neopentyl glycol hydroxy pivalate diacrylate
HPNDA-CL: Caprolactone-modified neopentyl glycol hydroxy pivalate diacrylate represented by formula (4), "HX-220" (manufactured by Nippon Kayaku Co., Ltd.).

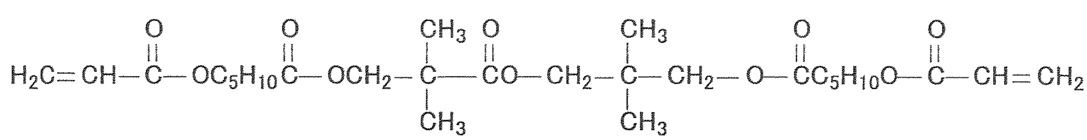 (4)

TPGDA: Tripropylene glycol diacrylate
DPGDA: Dipropylene glycol diacrylate
PEA: Phenoxyethyl acrylate
PM-2: Ethylene oxide-modified dimethacrylate phosphate (manufactured by Nippon Kayaku Co., Ltd.)
Irg. 184: IRGACURE 184 (manufactured by Ciba Specialty Chemicals.)
GA: Gallic acid

As shown in Tables 1 and 2, with respect to the optical disks prepared in Examples 1 to 9 each using one of the compositions according to the present invention, changes in reflectance were small in the durability test conducted in a high-temperature and high-humidity atmosphere, and changes in reflectance and the color difference were small in the fluorescent light exposure test, and thus the durability and the light resistance were favorable. In contrast, with respect to the optical disk prepared in Comparative Example 1, although the results of the durability test conducted in a high-temperature and high-humidity atmosphere was favorable, changes in reflectance and the color difference were large in the fluorescent light exposure test, and thus the light resistance was insufficient. With respect to the optical disks prepared in Comparative Examples 2 and 3, both the curability and the light resistance were insufficient. With respect

to the optical disk prepared in Comparative Example 4, the metal reflection layer was corroded and discolored in the durability test.

BRIEF DESCRIPTION OF THE DRAWINGS

FIG. 1 shows an embodiment of a monolayer-type optical disk according to the present invention.
FIG. 2 shows another embodiment of a monolayer-type optical disk according to the present invention.
FIG. 3 shows an embodiment of a dual-type optical disk according to the present invention.

BRIEF DESCRIPTION OF THE REFERENCE SYMBOLS

1 Substrate
2 Light reflection layer
3 Light transmission layer formed of ultraviolet-curable composition
4 Hard coat layer
5 Light reflection layer
6 Light transmission layer formed of ultraviolet-curable composition

## Claims

**1.** An ultraviolet-curable composition for forming a light transmission layer in an optical disk in which at least both a light reflection layer and the light transmission layer are laminated on a substrate, and in which a data is read using a laser beam striking from, a light transmission layer side,
the ultraviolet-curable composition comprising: an epoxy (meth)acrylate; a (meth)acrylat having two radical polymerizable unsaturated bonds; and a free-radical photopolymerization initiator, wherein
the (meth)acrylat having two radical polymerizable unsaturated bonds comprises a (meth)acrylate represented by formula (1):

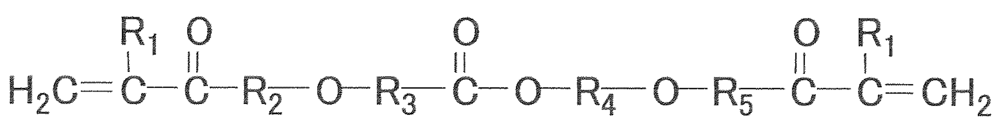
(1)

[in the formula (1),
$R_1$ represents a hydrogen atom or a methyl group,
$R_2$ represents a single bond, an alkylene oxide, or a group represented by formula (2):

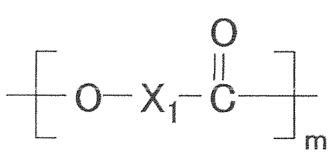
(2)

(wherein $X_1$ represents an alkylene group having 2 to 12 carbon atoms with or without a branched chain, and m represents an integer of 1 to 5),
$R_3$ and R4 represents an alkylene group having 2 to 12 carbon atoms with or without a branched chain, and
$R_5$ represents a single bond, an alkylene oxide group, or a group represented by formula (3):

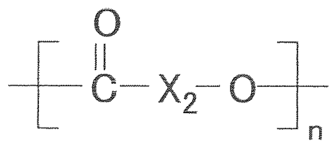 (3)

(wherein $X_2$ represents an alkylene group having 2 to 12 carbon atoms with or without a branched chain and n represents an integer of 1 to 5)],
the (meth)acrylate represented by the formula (1) accounts for 10 to 40% by mass of the ultraviolet-curable compound in the ultraviolet-curable composition, and
the free-radical photopolymerization initiator accounts for 1 to 4% bey mass of the ultraviolet-curable composition.

**2.** An ultraviolet-curable composition for an optical disk according to Claim 1,
wherein the epoxy (meth)acrylate is a (meth)acrylate represented by formula (viii):

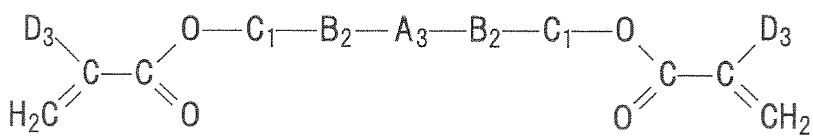 ( viii )

[in the formula (viii),
$D_3$ each independently represents a hydrogen atom or a methyl group,
$A_3$ represents a group represented by formula (ix):

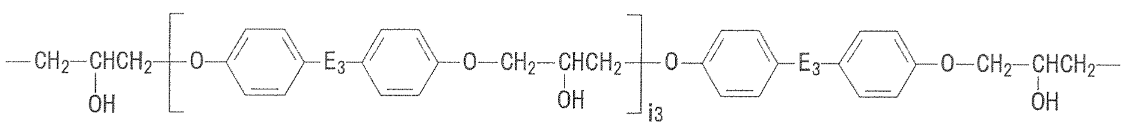 ( ix )

(in the formula (ix), $E_3$ represents $-SO_2-$, $-CH_2-$, $-CH(CH_3)-$ or $-C(CH_3)_2-$, and $i_3$ represents an integer of 0 to 8),
B2 represents a group represented by formula (x):

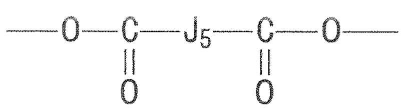 ( x )

(in the formula (x), $J_5$ represents: a bivalent aromatic hydrocarbon group in which a hydrogen atom is unsubstitued or substituted by an alkyl group having 1 to 6 carbon atoms; or a bivalent aliphatic hydrocarbon group having 2 to 10 carbon atoms with or without a branched chain),
$C_1$ represents: a group represented by formula (xi):

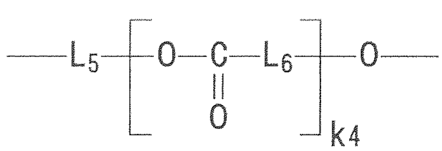 ( xi )

(wherein $L_5$ and $L_6$ each independently represents a bivalent aliphatic hydrocarbon group having 2 to 10 carbon

atoms with or without a branched chain, and $k_4$ each independently represents an integer of 1 to 20); or a group represented by formula (xii):

$$-L_7-\left[O-L_8\right]_{k5}-O- \qquad (xii)$$

(wherein $L_7$ and $L_8$ each independently represent a bivalent aliphatic hydrocarbon group having 2 to 10 carbon atoms with or without a branched chain, and $k_5$ each independently represents an integer of 1 to 20)].

**3.** An ultraviolet-curable composition for an optical disk according to Claim 2,
wherein the epoxy (meth)acrylate accounts for 10 to 70% by mass of the ultraviolet-curable compounds in the ultraviolet-curable composition.

**4.** An ultraviolet-curable composition for an optical disk according to Claim 2,
wherein the (meth)acrylate represented by the formula (1) is at least one selected from the group consisting of neopentyl glycol hydroxypivalate di(meth)acrylates and caprolactone-modified neopentyl glycol hydroxypivalate di (meth)acrylates.

**5.** An ultraviolet-curable composition for an optical disk according to any one of Claims 1 to 4, further comprising 3 to 40% by mass of a (meth)acrylate having one radical polymerizable unsaturated bond.

**6.** An optical disk comprising a substrate, a light reflection layer, and a light transmission layer comprising a cured body of an ultraviolet-curable composition, at least both the light reflection layer and the light transmission layer being laminated on the substrate, in which a data is read using a blue laser beam striking from a light transmission layer side, wherein the ultraviolet-curable composition is the ultraviolet-curable composition for an optical disk of any one of Claims 1 to 5.

**7.** An optical disk according to Claim 6, wherein the light transmission layer has a thickness of 70 to 110 $\mu$m.

FIG. 1

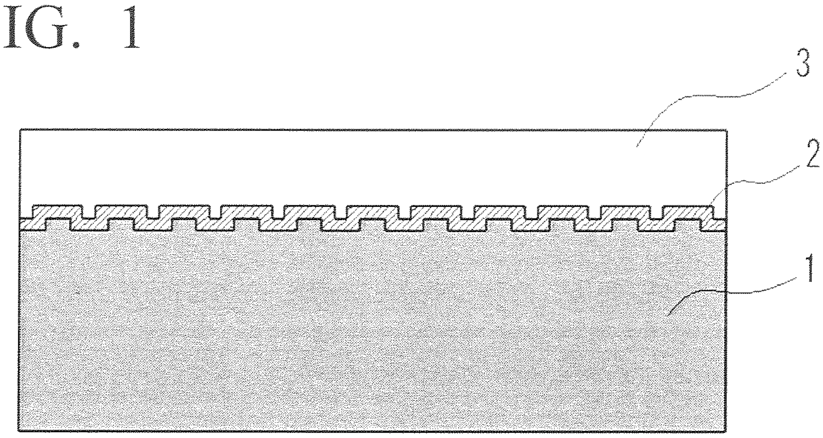


FIG. 2

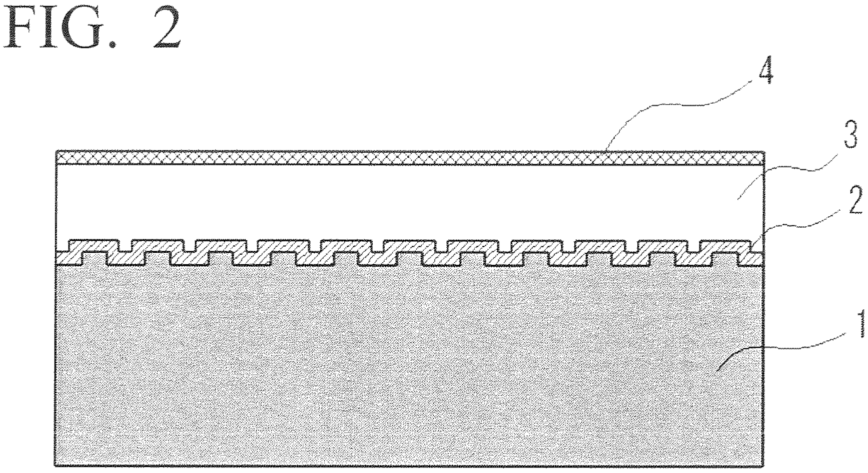


FIG. 3

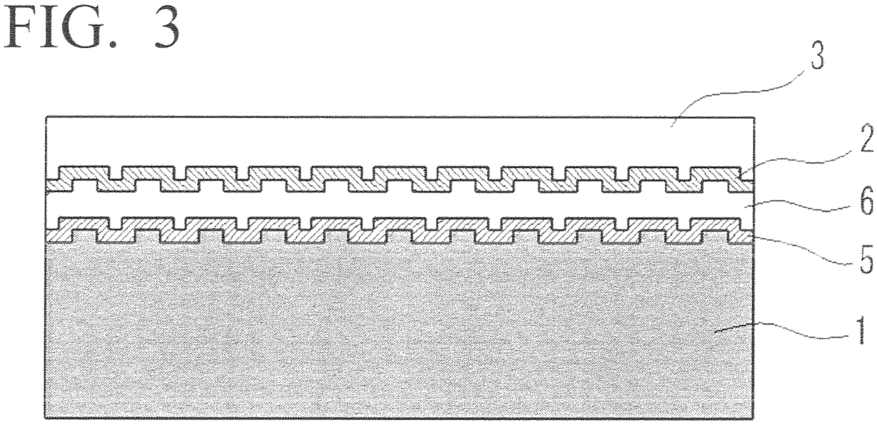

**INTERNATIONAL SEARCH REPORT**

International application No.
PCT/JP2008/055389

A. CLASSIFICATION OF SUBJECT MATTER
*G11B7/254*(2006.01)i, *C08F220/26*(2006.01)i, *C08F290/06*(2006.01)i, *G11B7/24*(2006.01)i, *G11B7/257*(2006.01)i

According to International Patent Classification (IPC) or to both national classification and IPC

B. FIELDS SEARCHED

Minimum documentation searched (classification system followed by classification symbols)
G11B7/254, C08F220/26, C08F290/06, G11B7/24, G11B7/257

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2002-230834 A (TDK Corp.), 16 August, 2002 (16.08.02), Par. Nos. [0071], [0074], [0084] (Family: none) | 1-7 |
| X | JP 10-130601 A (Nippon Kayaku Co., Ltd.), 19 May, 1998 (19.05.98), Claims; Par. No. [0025]; table 1 (Family: none) | 1-7 |
| X | JP 8-194968 A (Nippon Kayaku Co., Ltd.), 30 July, 1996 (30.07.96), Claims; table 1 (Family: none) | 1-7 |

[X] Further documents are listed in the continuation of Box C. [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 June, 2008 (12.06.08) | 24 June, 2008 (24.06.08) |
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

International application No.
PCT/JP2008/055389

C (Continuation). DOCUMENTS CONSIDERED TO BE RELEVANT

| Category* | Citation of document, with indication, where appropriate, of the relevant passages | Relevant to claim No. |
|---|---|---|
| X | JP 2004-175866 A (Nippon Kayaku Co., Ltd.), 24 June, 2004 (24.06.04), Claims; Par. No. [0017]; example 3 & US 2006/0074209 A1 & EP 1566422 A1 & WO 2004/048490 A1 & DE 60311143 D & DE 60311143 T & CA 2505550 A & BR 316671 A & KR 10-2005-0083993 A & CN 1714130 A | 1-7 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H11191240 B
- JP H11302309 B
- JP 2006104446 A
- US 5904795 A